# EUROPEAN PATENT APPLICATION

(11) **EP 2 412 767 A1**
(43) Date of publication of application: **01.02.2012**
(21) Application number: 10007961.5
(22) Date of filing: 30.07.2010
(51) Int. Cl.: C09D 11/10, G02B 3/00, G02B 5/00

(54) **Printing ink, use of printing ink, article and method for manufacturing an article**

(71) Applicant: LUXeXcel Holding BV., 4471 NC Wolphaartsdijk (NL)
(72) Inventor: Blessing, Kurt, 58507 Lüdenscheid (DE)
(74) Representative: Schwöbel, Thilo K.

(57) **Abstract**

The invention relates to a printing ink for printing optical structures on a substrate by means of an ink-jet printer, wherein the printing ink is at least partially transparent for optical light in the range between 380 and 780 nanometres, wherein the printing ink comprises a dynamic viscosity between 5 and 100 millipascal-seconds substantially at 25° C and wherein the printing ink comprises a surface tension of at least 30 millinewton per metre substantially at 25° C.

## Description

### BACKGROUND

The present invention relates generally to a printing ink (and associated methods) for printing optical structures on a substrate by means of an ink-jet printer (and articles prepared therefrom), wherein the printing ink is at least partially transparent for optical light in the range between 380 and 780 nanometres. More particularly, the present invention relates to a printing ink and associated methods that result in printed articles that have a plurality of printer (e.g., ink-jet printer-) dispensed adjoining and/or stacked droplets, which has a composition that includes at least one amorphous oxide (e.g., titanium dioxide), cured to define an optical structure that functions as one or more of a light directing structure, a lens, an optical prism, a Fresnel structure, a reflectors or the like.

It is common knowledge that products provided with optical structures can be manufactured in a comparably time-saving and inexpensive way by printing the optical structures directly on an appropriate substrate. Suchlike imprinted optical structures comprise lenses, mirrors or retroreflectors, for instance. The substrate can be made of synthetic material or glass. Furthermore, it is well known to cure the imprinted material by using light irradiation for reducing the overall printing time.

For example, German patent application DE 10 2006 003 310 A1 discloses a method for producing optical lenses from a moldable transparent material comprising a first step of depositing the material on a substrate and a subsequent second stop of curing the deposited material by a laser or by UV irradiation.

Disadvantageously, the optical structures are printed onto the substrate by using usual and well-known standard finisher printing liquids. Usually, suchlike printing liquids are used for printing finishing layers in order to protect the substrate and imprinted colour particles against outer mechanical and chemical influences. For this purpose, it is desirable to achieve a comparatively flat and plane finishing layer, so that the printing liquids known from the prior art distinctively comprise comparatively low viscosities and small surfaces tensions in order to provide high flow rates which compensates height differences on the surface of the substrate and the imprinted colour particles. But suchlike high flow rates make the formation of complex three dimensional structures by stacking droplets of the printing ink one above the other impossible because the droplets of printing ink usually deliquesce immediately after depositing onto the substrate or onto already deposited droplets.

Suchlike liquids are furthermore known from the European patent application EP 2 053 102 A1 disclosing a radiation curable inkjet fluids and inks improved for photoyellowing, for instance.

### SUMMARY

An object of the present invention is therefore to provide a printing ink that allows a comparably time-saving and inexpensive printing of optical structures in the form of complex three dimensional shapes in order to achieve arbitrary optical effects.

The object of the present invention is achieved by a printing ink for printing optical structures on a substrate by means of an ink-jet printer, wherein the printing ink (after curing) is at least partially transparent for optical light in the range between 380 and 780 nanometres, wherein the printing ink exhibits (prior to curing) a dynamic viscosity between 5 and 100 millipascal-seconds at temperatures substantially at 25° C and wherein the printing ink exhibits (prior to curing) a surface tension of at least 30 millinewton per metre substantially at 25° C.

According to the present invention, it is thereby advantageously possible to provide a transparent printing ink featuring a medium to high dynamic viscosity and a high surface tension in comparison to the usual printing liquid known from the prior art. It is herewith advantageously possible for the first time to print complex optical structures onto a substrate by means of an ink-jet printer, e.g. piezo, pressure valve or bubble jet printer, wherein the optical structure is performed with a three dimensional shape in order to achieve certain optical effects by stacking droplets of the printing ink one above the other. The optical structures preferably comprise light directing structures, like optical lenses, optical prisms, Fresnel structures, reflectors or the like. Another advantage of the present invention is that the optical effectiveness of the optical structures is increased as the printing ink allows the building of comparatively complex optical structures with greater differences in heights and/or depths. Furthermore, the overall printing time for providing those structures can be reduced as the deposited droplets do not deliquesce immediately after depositing onto the substrate or onto other deposited droplets. Furthermore, the printing ink according to the present invention comprises reduced adhesion forces compared to the adhesion forces of printing liquids known from the prior art. Consequently, the combination of increased surface tension and decreased adhesion forces causes larger contact angles between the deposited droplets and the substrate. Yet, surprisingly, the ink has sufficient capability to bond to an underlying substrate.

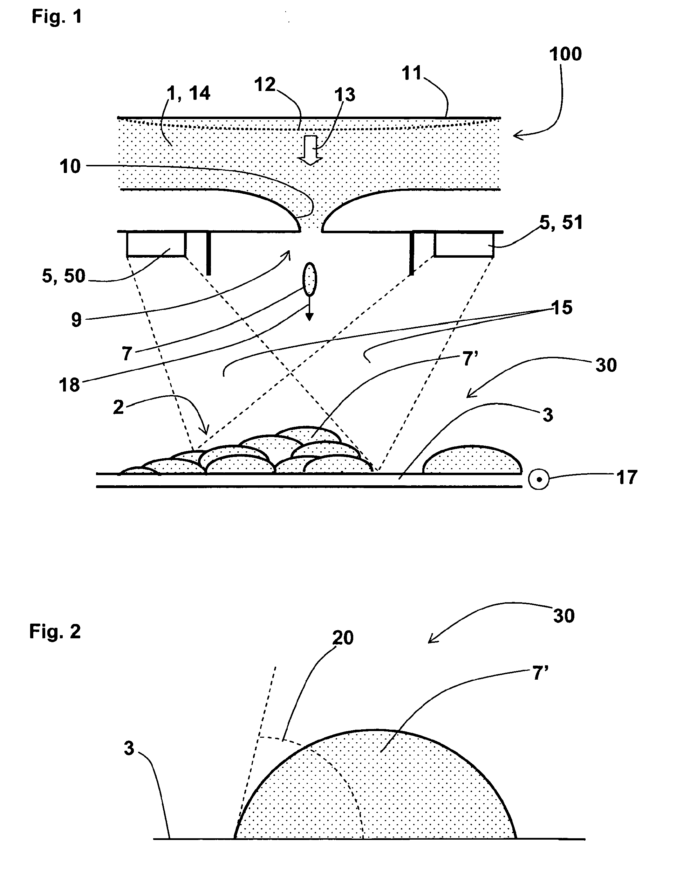

According to a preferred embodiment of the present invention, the printing ink is designed in such a manner that the contact angle (specifically, the angle at which a liquid/vapour interface meets a solid surface, as illustrated by reference numeral 20 in Fig. 2) resulting from a single droplet directly deposited on the substrate (and measured substantially contemporaneously (e.g., within less than 1 minute, 30 seconds, 10 seconds or shorter) is within the range between 20 and 100 degrees, preferably between 40 and 90 degrees and particularly preferably between 60 and 80 degrees in order to improve the formation of comparatively deep three dimensional structures in short printing times. The substrate preferably comprises a PMMA (polymethylmethacrylate) sheet.

According to another subject of the present invention or to another preferred embodiment of the present invention the printing ink a transmission factor of at least 90 percent for optical light with wavelengths between 400 and 700 nanometres, a refractive index larger than 1,4 and a surface tension of at least 100 millinewton per metre. It is herewith advantageously possible to increase the efficiency of the imprinted optical structures compared to the prior art, because on the one hand the comparatively high surface tension allows the formation of complex optical structures with greater height differences and on the other hand the comparatively high refractive index allows a stronger influence on light beams passing the optical structures.

According to a preferred embodiment of the present invention, the printing ink comprises a transmission factor of at least 95 percent and preferably of at least 98 percent for optical light with wavelengths between 400 and 700 nanometres.

Consequently, the light losses may be substantially smaller compared to conventional printing ink.

Preferably, the printing ink according to the present invention furthermore comprises particles (e.g., nanoparticles and/or microparticles) of one or more amorphous inorganic compounds (e.g., one or more oxides), such as a transparent titanium-containing compound. In particular, the printing ink comprises between 0,1 wt % and 7 wt % of transparent titanium dioxide. It is herewith advantageously possible to increase the refractive index of the printing ink in order to optimize the efficiency of the imprinted optical structures. In particular, the printing ink comprises a refractive index larger than 1,5 and preferably larger than 1,8.

According to another embodiment of the present invention the printing ink exhibits at the time of deposit a surface tension of at least 35 millinewtons per metre and preferably of at least 40 millinewtons per metre. It was surprising and not predictable for the person skilled in the art that a printing ink with the above mentioned surface tension allows a comparatively fast and precise formation of complex three dimensional optical structures. In particular, on the one hand the problem that the deposited droplets deliquesce immediately after depositing onto the substrate is resolved and on the other hand the printing ink is further on usable in inkjet printers following the principle of the drop-on-demand technology. Moreover, the composition is still capable of deposit using art-disclosed equipment while avoiding clogging of the printhead nozzle.

In a preferred embodiment, the printing ink comprises at least one photoinitiator responsive to ultraviolet light for curing the printing ink by irradiation with ultraviolet light in the range of 200 to 400 nanometers. The photoinitiator is responsive to ultraviolet light, so that droplets of printing ink deposited on the substrate by a print head of the inkjet printer are curable by irradiation with ultraviolet light. Due to this, the print head preferably comprises a light source emitting ultraviolet light. In particular, the at least one photoinitiator comprises a response time shorter than 0,1 seconds. The comparatively short response time advantageously provide fast printing times. Beside the time advantage, the reduced printing time also solves the problem that the printing ink possibly reacts with Oxygen (before the printing ink is substantially cured) which causes undesirable discolorations of the printing ink. Thus, the methods herein typically may include one or more steps of depositing the ink and curing the ink sufficiently rapidly after the depositing so that formation of colored oxide products visible to the naked eye is avoided.

According to a preferred embodiment of the present invention, the printing ink preferably comprises at least a first photoinitiator and a second photoinitiator, wherein the second photoinitiator differs from the first photoinitiator, and will be activated by a different respective radiation wavelength. Preferably, the first photoinitiator is substantially responsive to ultraviolet light with wavelengths in the range of 200 to 260 nanometres and wherein the second photoinitiator is substantially responsive to ultraviolet light with wavelengths in the range of 300 to 365 nanometres. It is herewith advantageously possible to achieve different curing characteristics of the printing ink depending on the wavelength of the radiation employed (e.g., ultraviolet light). The print head e.g. comprises a first and a second light source, wherein the first light source is capable of emitting ultraviolet light with wavelengths between 200 and 260 nanometres and wherein the second light source is capable of emitting ultraviolet light with wavelength between wavelengths between 300 and 365 nanometres. Deposited droplets can be provisionally cured by using the first light source initiating the first photoinitiator, wherein a final curing is performed by using the second light source after the whole optical structure has been designed, for instance. An advantage of a suchlike double curing procedure is that the formation of distinctive interfaces between different deposited droplets can be eliminated so that a comparatively good optical quality of the optical structures can be achieved.

According to another preferred embodiment of the present invention, the first photoinitiator comprises a response time shorter than 0,1 second and wherein the second photoinitiator comprises a response time shorter than 0,01 seconds. Consequently, the curing procedure can be divided into a provisional curing procedure in which the second photoinitiator is initiated by irradiation (e.g, with ultraviolet light) and a final curing procedure (e.g, following or possibly even overlapping with the provisional curing) in which also the first second photoinitiator is initiated by further irradiation (e.g., with ultraviolet light).

By way of a particular protocol for curing, it is possible that the printing ink is composed in such a manner that a quantity of 0,1 to 32 picolitres of printing ink is substantially cured after a radiation exposure time shorter than 250 milliseconds and preferably shorter than 50 milliseconds. Advantageously, the printing ink is deposited on the substrate by the printer head in the form of droplets of 0,1 to 32 picolitres. With the above mentioned curing time it is advantageously possible to provide a comparatively fast printing procedure on the one hand and to achieve the formation of comparatively complex optical structures.

The printing ink and/or resulting articles herein may include one or more agents that are included for tuning one or more optical characteristic. For example, one or more agents for altering the refractive index of the printing ink may be employed. Thus, the printing ink may comprise particles made of silicon dioxide (e.g., glass particles) in order to increase the refractive index of the printing ink. The printing ink furthermore may comprise additives of barium and/or lead. According to a preferred embodiment the printing ink comprises a polymer base. The polymer may be provided as a crosslinkable ingredient (e.g., one or more monomer) that is photo-activated to cause crosslinking within itself, between two or more droplets and/or between one or more droplets and a substrate.

Printing ink according to one of the preceding claims, characterized in that the printing ink comprises at least one solvent, at least one reactive diluent, at least one binding agent, at least one photoinitiator, at least one softening agent and/or at least one colouring agent. It is herewith advantageously possible to use the printing ink in conventional inkjet printers and/or in conventional printer heads.

The ink may include as some or all of the binding agent, one or more monomer, polymer or other resin that is capable of curing to a substantially transparent body (e.g., following reaction with at least a portion of the reactive diluent). Examples include one or more of styrenics, acrylates and/or methacrylates, The diluents (e.g., the reactive diluents) may include a relatively low (e.g., relative to the above monomer or polymer) molecular weight monomer, oligomer polymer or other resin. For example, it may be one or more of a styrenic, an acrylate and/or a methacrylate.

Examples of art-disclosed materials that may be employed herein for the ink ingredients may be found in WO 2007/002328 (incorporated by reference).

According to another preferred embodiment of the present invention, the printing ink comprises between 27 to 47 percent and preferably about 37 percent of solvent (which may include water and/or a volatile organic compound) and/or the printing ink comprises between 17 to 37 percent and preferably about 27 percent of reactive diluent and/or the printing ink comprises between 15 to 35 percent and preferably about 25 percent of binding agent and/or the printing ink comprises between 1 to 15 percent and preferably about 7,5 percent of photoinitiator and/or the printing ink comprises between 1 to 6 percent and preferably about 3 percent of softening agent and/or the printing ink comprises between 1 to 3 percent and preferably about 1,5 percent of colouring agent. It was surprising and not predictable for the person skilled in the art that a suchlike combination of ingredients of the printing ink promotes the formation of complex optical structures in short printing times and with maximum optical effectiveness of the optical structures. Upon printing, it will be appreciated that the solvent will evaporate, and the reactive diluent will cure with at least a portion of the binding agent.

Preferably, the printing ink comprises one or more other ingredients in an amount and of a type that each such ingredient will not materially interfere with the advantageous curing and/or optical characteristics realizable from the compositions herein. For example, the ink may include one or more anti-reflex, anti-fogging and/or scratch-proof ingredients in order to increase the mechanical resistance of the optical structures. Furthermore, it can be appropriate that the printing ink is treated with further additives for increasing the chemical resistance.

Another subject of the present invention is the use of a printing ink according the present invention.

Another subject of the present invention is articles that are made using a printing ink according the present invention.

Another subject of the present invention is a method for manufacturing an article by depositing droplets of printing ink according to the present invention onto a substrate by using an inkjet printer. The method comprises the steps of providing the substrate, ejecting at least one droplet of printing ink towards the substrate and curing the at least one deposited droplet. Preferably, curing the at least one deposited droplet is performed by using ultraviolet light emitted from at least one radiation source such as a UV-LED (ultraviolet emitting light-emitting diode. According to a preferred embodiment, the method comprises a step of conveying the substrate relatively to the printing head along a conveying direction. In particular, the method furthermore comprises a step of moving a print head ejecting the at least one droplet to a certain position relatively to the substrate before ejecting the at least one droplet. The steps of moving the print head, ejecting the at least one droplet and/or curing the at least one deposited droplet are repeated one or more times in order to generate an optical structure onto the substrate, wherein the substrate and the optical structure form at least a part of the article. Optical structures in the sense of the present invention in particular comprise micro lenses, Fresnel structures, optical prisms and the like, which are made of multiple droplets of printing ink deposited by the printing head onto the substrate. The methods herein may specifically include one or more steps of depositing one or more droplets (each having a volume of less than 50 picoliters) of the present ink onto a substrate (as described), provisionally curing the one or more droplets (e.,g., by irradiating it for a period of less than about 50 milliseconds), and then final curing the one or more droplets (e.,g., by irradiating it for a period of from 50 milliseconds to 250 milliseconds). The steps may be repeated a sufficient number of times to form the desired final structure. The steps may be performed in such a way that build-up of an article is achieved in the substantial absence of self-leveling by the droplets, thereby retaining the ultimate desired optical attributes.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically shows an example of a print head comprising a printing ink for printing optical structures onto a substrate according to an exemplary embodiment of the present invention.
Figure 2 exemplarily illustrates a contact angle between the substrate and a deposited droplet of printing ink according to the exemplary embodiment of the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated. The relative amounts of two or more ingredients of a composition are also within the teachings. For example if stated as an amount of ingredient A of 10 wt% and ingredient B of 20wt%, the teachings herein also contemplate the weight ratio of A:B of 1:2, even if such ratio is not explicitly stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

Where reference is made herein to "comprising", "including" or their derivatives, the teachings also contemplate subject matter that "consists of" or "consists essentially of" the recited feature or features.

Figure 1 schematically shows an example of a print head 100. The print head 100 can be filled so that it comprises a printing ink 1 (e.g., held in a suitable chamber), for printing optical structures 2 onto a substrate 3 according to an exemplary embodiment of the present invention.

The illustrated print head 100 comprises an ejecting device 9 and a curing device at its bottom side. The ejecting device 9 comprises an ejecting nozzle 10 for ejecting droplets 7 of the printing ink 1, wherein the printing ink 1 is provided in an inner chamber 14 of the print head 100. The ejecting device 9 is applicable for ejecting the droplets 7 onto the substrate 3 in order to generate the optical structures 2 in the form of complex three dimensional structures like optical lenses, optical prism, Fresnel lenses or the like. The substrate 3 is preferably made of a transparent material such as a synthetic film material or alternatively a transparent rigid body such as a glass plane. The printing ink 1 is a transparent and/or translucent polymer based ink curable by radiation (e.g. ultraviolet light), as described previously. Preferably, the substrate 3 comprises a PMMA (polymethylmethacrylate) sheet. The curing device comprises a source of radiation (e.g. one, two, or more UV-LED's 5 (ultraviolet emitting light-emitting diode)) for curing the deposited droplet 7. State of the art curing devices are available using various technologies ranging from Iron doped arc-lamps to direct LED based devices such as those available from Phoseon Technology (Hillsboro, USA). A 390 nm LED based system at 4-6 W/cm.sq was used as a reference setup, for instance.

The nozzle 10 is located between these two UV-LED's 5. The radition source may be such to emit one or more beams of radiation, such as in the form of light cones. For example, the light cones 15 of each UV-LED's 5 are schematically illustrated in figure 1 as dotted lines. The print head 100 can be a part of a piezo inkjet printer. The print head 1 exemplary uses a piezoelectric material 11 in the ink-filled chamber 14 behind the nozzle 10. When a voltage is applied to the piezoelectric material 11, the piezoelectric material 11 changes its shape (see doted curve 12), which generate a pressure pulse 13 in the liquid printing ink 1 inside the chamber 14 forcing a droplet 7 of the printing ink 1 from the nozzle 10 towards the substrate 3 along the ejection direction 18 (the ejection direction 18 is directed perpendicular to the plane of the substrate 3 in the present example). The droplet 7 is deposited on the substrate 3 onto other previous printed droplets 7' in order to generate the optical structure 2. Subsequently, the UV-LED's 5 or other radiation source is actuated, so that the deposited droplet 7 is cured (e.g. due to irradiation with ultraviolet light from the UV-LED's 5 with wavelengths in the range between 200 to 400 nanometres). The optical structure 2 comprises an optical prism in the present example. The size of the respective droplets 7 depends on the amount of printing ink 1 ejected by the nozzle 10 at once. The droplets 7 typically comprises a quantity of 0,1 to 32 picolitres of printing ink 1. The substrate 3 and the optical structure 2 form at least a part of an article 30.

After depositing and curing, and evaporation of solvent, the printing ink 1 is at least partially transparent and/or or translucent for optical light in the range between 380 and 780 nanometres. The printing ink 1 is designed in such a manner that the dynamic viscosity (prior to cure) of the printing ink 1 is between 5 and 100 millipascal-seconds at temperatures between 20° and 40° C. Simultaneously, (prior to cure) the printing ink 1 comprises a surface tension of at least 30 millinewton per metre at 25° C, preferably of at least 35 millinewton per metre at 25° C and particularly preferably of at least 40 millinewton per metre at 25° C. Said features of the printing ink 1 promotes the formation of complex optical structures 2 with comparatively large differences in heights and depths combined with a short overall printing time, because the deposited droplets 7 do not deliquesce after depositing onto the substrate 3 or onto other already deposited droplets 7'. Furthermore, the adhesion forces of the printing ink 1 are reduced compared to the adhesion forces of printing liquids known from the prior art. Consequently, the combination of increased dynamic viscosity, increased surface tension and decreased adhesion forces causes larger contact angles between the deposited droplets 7 and the substrate 3 or other deposited droplets 7'. Therefore, the printing ink 1 improves the formation of comparatively deep three dimensional optical structures 2.

The dynamic viscosity of the printing ink 1 can be measured with a Brookfield DV-II+ viscometer at 25° C and a shear rate 3 RPM. For measurement of the surface tension of the printing ink 1 a tensiometer (e.g. K9 or K11 MK3) from Kruss GmbH (Hamburg, Germany) can be used.

The cured printing ink 1 comprises a transmission factor of at least 90 percent, preferably of at least 98 percent for optical light with wavelengths between 400 and 700 nanometres and a refractive index larger than 1,4, preferably larger than 1,5 in order to increase the efficiency of the optical structures 2.

The transmission factor of a e.g. 10 to 15 micron thick layer of cured printing ink 1 on a transparent substrate 3 can easily be determined using a L* measurement of a visual spectrum spectrometer such the eye-one as available from X-Rite (Siemensstraße 12b, Neu-Isenburg 63263, Germany) using transmission mode but other methods for characterizing the transmission factor of deposited ink layer are also possible.

In the present embodiment, one specific example for a printing ink prior to deposition and cure is such that the printing ink 1 comprises about 37 wt% of solvent, about 27 wt% of reactive diluent, about 25 wt% of binding agent, about 7,5 wt% of photoinitiator, about 3 wt% of softening agent and about 1,5 wt% of colouring agent, for instance. Furthermore, the printing ink 1 is treated with transparent titanium dioxide and/or glass particles made of silicon dioxide in order to increase the refractive index. In particular, the printing ink 1 comprises additives of barium and/or lead.

According to a first example, the printing ink 1 comprises only one photoinitiator which is responsive to ultraviolet light for curing the deposited droplets 7 by irradiation with ultraviolet light in the range of 200 to 400 nanometers emitted by the UV LED's 5. The photoinitiator comprises a response time shorter than 0,1 seconds, wherein the printing ink 1 is composed in such a manner that a quantity of 0,1 to 32 picolitres of printing ink 1 is substantially cured after a radiation exposure time shorter than 250 milliseconds and preferably shorter than 50 milliseconds.

According to a second example, the printing ink 1 comprises a first photoinitiator and a second photoinitiator, wherein the second photoinitiator differs from the first photoinitiator in such a manner that the first photoinitiator is substantially responsive to ultraviolet light with wavelengths in the range of 200 to 260 nanometres, wherein the second photoinitiator is substantially responsive to ultraviolet light with wavelengths in the range of 300 to 365 nanometres. Consequently, different curing characteristics of the printing ink 1 depending on the wavelengths of the emitted ultraviolet light can be achieved. For this purpose, the UV-LED's 5 comprises a first and a second light source 50, 51, wherein the first light source 50 is capable of emitting ultraviolet light with wavelengths between 200 and 260 nanometres and the second light source 51 is capable of emitting ultraviolet light with wavelength between 300 and 365 nanometres. Deposited droplets 7' can be provisionally cured by using the first light source 50 initiating the first photoinitiator, wherein a final curing is performed by using the second light source 51 after the whole optical structure 2 has been designed, for instance.

Printing the optical structure 2 preferably comprises computer-controlled steps of moving the print head 1 to a certain position relatively to the substrate 3, ejecting a certain amount of printing ink 1 as the droplet 7 towards the substrate 3 and curing the deposited droplet 7 by ultraviolet light emitted from at least one of the two UV-LED's 5, wherein these steps are repeated several times until the desired optical structure 2 is generated. Meanwhile, the substrate 3 moves along a conveying direction 17 through the printer. It is conceivable that furthermore a picture, like a motif, lettering, logo or the like, is printed onto the substrate 3 by the same print head 199, wherein the printing of the picture is performed before, during or after printing the optical structure 2. The step of printing the picture is accomplished by depositing conventional colored printing ink onto the substrate 3, wherein the printing head 1 comprises an additional printing ink tank (not shown in figure 1) storing the conventional colored printing ink and an additional ejection device (not shown in figure 1) for ejecting the conventional colored printing ink from the additional printing ink tank to the substrate 3.

Figure 2 exemplarily illustrates a contact angle 20 between the substrate 3 and a deposited droplet 7' of printing ink 1 according to the exemplary embodiment of the present invention. The contact angle 20 between the substrate 3 and the single droplet 7' directly deposited on the substrate 3 is within the range between 60 and 80 degrees in order to improve the formation of comparatively deep three dimensional optical structures 2 in short printing times. An apparatus such as the DSA100 from Kruess GmbH (Hamburg, Germany) can be used for the determination of the contact angle 20 on a substrate 3 such as the PMMA reference sheet. The substrate may be coated with an optional suitable art-disclosed adhesion promoter.

### LIST OF REFERENCE NUMERALS

- 1: printing ink
- 2: optical structure
- 3: substrate
- 5, 50, 51: UV-LED
- 7, 7': droplets
- 9: ejection device
- 10: nozzle
- 11: piezoelectric material
- 12: doted curve
- 13: pressure pulse
- 14: chamber
- 17: conveying direction
- 18: ejection direction
- 20: contact angle
- 30: article
- 100: print head of an ink-jet printer

## Claims

1. Printing ink (1) for printing optical structures (2) on a substrate (3) by means of an ink-jet printer (100), wherein the printing ink (1) is at least partially transparent for optical light in the range between 380 and 780 nanometres, **characterized in that** the printing ink (1) comprises a dynamic viscosity between 5 and 100 millipascal-seconds at temperatures substantially at 25° C and wherein the printing ink (1) comprises a surface tension of at least 30 millinewton per metre substantially at 25° C.

2. Printing ink (1) according to claim 1 or according to the preamble of claim 1, **characterized in that** the printing ink (1) comprises a transmission factor of at least 90 percent for optical light with wavelengths between 400 and 700 nanometres, a refractive index larger than 1,4

3. Printing ink (1) according to claim 2, **characterized in that** the printing ink (1) comprises a transmission factor of at least 95 percent and preferably of at least 98 percent for optical light with wavelengths between 400 and 700 nanometres.

4. Printing ink (1) according to one of the preceding claims, **characterized in that** the printing ink (1) is designed in such a manner that the contact angle (20) between the substrate (3), preferably a PPMA reference substrate (3), and a single droplet directly deposited on the substrate (3) is within the range between 20 and 100 degrees, preferably between 40 and 90 degrees and particularly preferably between 60 and 80 degrees.

5. Printing ink (1) according to one of the preceding claims, **characterized in that** the printing ink (1) comprises between 0,1 wt % and 7 wt % of transparent titanium dioxide.

6. Printing ink (1) according to one of the preceding claims, **characterized in that** the printing ink (1) comprises a surface tension of at least 35 millinewton per metre substantially at a temperature of 25° C and preferably of at least 40 millinewton per metre substantially at a temperature of 25° C.

7. Printing ink (1) according to one of the preceding claims, **characterized in that** the printing ink (1) comprises a refractive index larger than 1,5, preferably larger than 1,8

8. Printing ink (1) according to one of the preceding claims, **characterized in that** the printing ink (1) comprises at least one photoinitiator responsive to ultraviolet light for curing the printing ink (1) by irradiation with ultraviolet light in the range of 200 to 400 nanometers.

9. Printing ink (1) according to claim 8, wherein the at least one photoinitiator comprises a response time shorter than 0,1 seconds.

10. Printing ink (1) according to one of the preceding claims, **characterized in that** the printing ink (1) comprises at least a first photoinitiator and a second photoinitiator, wherein the second photoinitiator differs from the first photoinitiator.

11. Printing ink (1) according to claim 10, wherein the first photoinitiator is substantially responsive to ultraviolet light with wavelengths in the range of 200 to 260 nanometres and wherein the second photoinitiator is substantially responsive to ultraviolet light with wavelengths in the range of 300 to 365 nanometres.

12. Printing ink (1) according to one of the claims 10 or 11, wherein the first photoinitiator comprises a response time shorter than 0,1 second and wherein the second photoinitiator comprises a response time shorter than 0,01 seconds.

13. Printing ink (1) according to one of the preceding claims, **characterized in that** the printing ink (1) is composed in such a manner that a quantity of 0,1 to 32 picolitres of printing ink (1) is substantially cured after a radiation exposure time shorter than 250 milliseconds and preferably shorter than 50 milliseconds.

14. Printing ink (1) according to one of the preceding claims, **characterized in that** the printing ink (1) comprises glass particles made of silicon dioxide.

15. Printing ink (1) according to claim 14, **characterized in that** the printing ink (1) comprises additives of barium and/or lead.

16. Printing ink (1) according to one of the preceding claims, **characterized in that** the printing ink (1) comprises a polymer base.

17. Printing ink (1) according to one of the preceding claims, **characterized in that** the printing ink (1) comprises at least one solvent, at least one reactive diluent, at least one binding agent, at least one photoinitiator, at least one softening agent and/or at least one colouring agent.

18. Printing ink (1) according claim 17, **characterized in that** printing ink (1) comprises between 27 to 47 wt % and preferably about 37 wt % of solvent and/or **in that** the printing ink (1) comprises between 17 to 37 wt % and preferably about 27 wt % of reactive diluent and/or **in that** the printing ink (1) comprises between 15 to 35 wt % and preferably about 25 wt % of binding agent and/or **in that** the printing ink (1) comprises between 1 to 15 wt % and preferably about 7,5 wt % of photoinitiator and/or **in that** the printing ink (1) comprises between 1 to 6 wt % and preferably about 3 wt % of softening agent and/or **in that** the printing ink (1) comprises between 1 to 3 wt % and preferably about 1,5 wt % of colouring agent.

19. Printing ink (1) according to one of the preceding claims, **characterized in that** the printing ink (1) comprises anti-reflex, anti-fogging and/or scratch-proof ingredients.

20. Use of a printing ink (1) according to one of the preceding claims for printing optical structures (2) on a substrate (3) by means of an ink-jet printer (100).

21. An article (30) prepared using a printing ink (1) of any of the preceding claims 1 through 20.

22. A method for manufacturing an article (30) according to claim 21 by depositing droplets (7) of printing ink (1) according to one of the claims 1 to 19 onto the substrate (3) by using an inkjet printer.

23. Method according to claim 22, **characterized in that** the method comprises the steps of providing the substrate (3), ejecting at least one droplet (7) of printing ink (1) towards the substrate (3) and curing the at least one deposited droplet (7') by using a curing device, preferably an UV-LED (5).
